# EUROPÄISCHE PATENTSCHRIFT

(11) **EP 0 586 843 B1**
(45) Veröffentlichungstag und Bekanntmachung des Hinweises auf die Patenterteilung: **27.09.1995**
(21) Anmeldenummer: 93111622.2
(22) Anmeldetag: 21.07.1993
(51) Int. Cl.: C09J 175/04, C08G 18/10

(54) **Verfahren zur Herstellung von Verbundfolien**
Method for making film laminates
Procédé pour préparer des feuilles laminées

(30) Priorität: 08.09.1992 DE 4229953
(43) Veröffentlichungstag der Anmeldung: 16.03.1994
(73) Patentinhaber: MORTON INTERNATIONAL GmbH, D-28239 Bremen (DE)
(72) Erfinder: Heinrich, Siegfried, D-27711 Hülseberg (DE); Schneidinger, Frank, Marengo Il. 60152 (US); Schetschok, Hans-Günter, D-27751 Delmenhorst (DE)
(74) Vertreter: Weber, Dieter, Dr.

(56) Entgegenhaltungen:
- EP-A- 0 002 513
- EP-A- 0 152 102
- EP-A- 0 295 677
- US-A- 4 750 963
- CHEMICAL ABSTRACTS, vol. 99, no. 26, Dezember 1983, Columbus, Ohio, US; abstract no. 213709u, Seite 57

## Beschreibung

Die Erfindung betrifft ein Verfahren zur Herstellung von Verbundfolien durch Verkleben von wenigstens zwei Folien mittels eines Polyurethanklebstoffes unter Befeuchten der Klebstoffschicht oder der klebstofffreien Folie.

Bekanntermaßen werden Folienverbunde, wie beispielsweise solche aus Polyethylen-, Polypropylen-, Polyamid-, Polyethylenterephthalat-, Cellophan- oder Aluminiumfolien, unter Verwendung von Polyurethanklebstoffen hergestellt. Bei diesen Klebstoffen handelt es sich beispielsweise um Einkomponentensysteme, die durch die Anwesenheit von Feuchtigkeit ausgehärtet werden, oder um Zweikomponentensysteme auf der Basis linearer Polyurethane und höherfunktioneller Polyisocyanate als Vernetzer. Beispielhalber wird hierzu auf die europäische Patentschrift Nr. 0 176 726, die deutsche Patentschrift Nr. 2 549 227 und die deutsche Offenlegungsschrift Nr. 4 021 113 hingewiesen.

Für die Herstellung von Folienverbunden arbeitete man gewöhnlich mit katalysatorfreien Polyurethansystemen als Klebstoffe, da Katalysatoren zur Beschleunigung der Aushärtung die Topfzeit so stark verkürzen, daß eine praktische Verwendung schwierig, wenn nicht gar unmöglich wird. Das Arbeiten mit katalysatorfreien Polyurethansystemen hat jedoch den Nachteil, daß man sehr lange Härtungszeiten und geringe Anfangsfestigkeiten bekommt und daß eine starke Migration von Polyisocyanat in die Folien auftritt, soweit es sich nicht um Metallfolien handelt.

Um die Reaktionszeiten des Polyurethanklebstoffes zu verkürzen, hat man im Falle von Einkomponentensystemen bereits die Klebstoffschicht beim Kaschieren beispielsweise durch Besprühen mit Wasser beleuchtet. Dies ergab einen gewissen Effekt, der jedoch bei weitem noch nicht für praktische Anwendung befriedigt.

Die der Erfindung zugrundeliegende Aufgabe bestand somit darin, die bekannten Verfahren zur Herstellung von Verbundfolien weiter zu verbessern und insbesondere eine schnellere Aushärtung und höhere Anfangsfestigkeit sowie geringere Isocyanatmigration zu bekommen, ohne gleichzeitig auch die Topfzeit des Polyurethanklebstoffes herabzusetzen.

Erfindungsgemäß wird diese Aufgabe durch ein Verfahren zur Herstellung von Verbundfolien durch Verkleben von wenigstens zwei Folien mittels eines Polyurethanklebstoffes unter Beleuchtung der Klebstoffschicht oder der klebstofffreien Folien gelöst, das dadurch gekennzeichnet ist, daß man die Befeuchtung mit einer wäßrigen Lösung wenigstens eines die Aushärtungsreaktionen des Polyurethanklebstoffes beschleunigenden Katalysators vornimmt.

Da die wäßrige Katalysatorlösung erst unmittelbar vor dem Kaschieren der Folien mit dem Polyurethanklebstoff in Berührung gelangt, hat der Katalysator keine Möglichkeit, die Topfzeit des Polyurethanklebstoffes zu beeinflussen. Andererseits wird durch das Befeuchten mit einer wäßrigen Katalysatorlösung die Reaktionszeit des Polyurethanklebstoffes stark verkürzt, so daß man erheblich gesteigerte Anfangsfestigkeiten der Verbundfolie sowie wesentlich schnellere Aushärtungszeiten und geringere Isocyanatmigrationen bekommt. Es ist überraschend, daß ein solcher starker Effekt insbesondere bezüglich der Anfangsfestigkeiten erzielt wird, obwohl nach dem erfindungsgemäßen Verfahren die Polyurethanklebstoffschicht zunächst nur oberflächlich mit der Katalysatorlösung in Berührung kommt.

Das erfindungsgemäße Verfahren ist für den Verbund beliebiger Folien oder Schichtstoffe geeignet. Diese können beliebige Kunststoffe, wie Polyolefine, Polyamide, Polyester, Polyether oder Polyvinylchlorid, Metallfolien, wie Aluminiumfolien, Flächengebilde aus Faserstoffen, wie Papier oder Karton, oder ähnliches, sein. Von diesen Folien können gleiche oder verschiedene erfindungsgemäß miteinander kaschiert werden.

Die erfindungsgemäß zu verwendenden Polyurethanklebstoffe sind aus zahlreichen Literaturstellen bekannt und können Einkomponentensysteme oder Zweikomponentensysteme sein. Die Polyurethanklebstoffe sind aus mindestens einem organischen Polyisocyanat und wenigstens einem Polyol aufgebaut, das seinerseits beispielsweise ein mehrere Hydroxylgruppen aufweisendes Oligourethan, ein Polyesterpolyol, Polyetherpolyol oder Polyether-Esterpolyol sein kann.

Typische Beispiele von Diisocyanaten für Polyurethanklebstoffe sind 1,6-Diisocyanatohexan, 1,10-Diisocyanatodecan, 1,3-Diisocyanatocyclopentan, 1,4-Diisocyanatocyclohexan, 1-Isocyanato-3,3,5-trimethyl-3- oder -5-isocyanatomethylcyclohexan, 4,4'-,2,4'- und 2,2'-Diisocyanatodiphenylmethan, 1,5-Diisocycanatonaphthalin, 4,4'-Diisocyanatodicyclohexylmethan, 1,4-Diisocyanatobenzol und/oder 2,4- oder 2,6-Diisocyanatotoluol. Geeignete Polyole sind beispielsweise Alkandiole mit linearer oder verzweigter Kohlenstoffkette, wie Ethylenglycol, 1,2-Dihydroxypropan, 1,3-Dihydroxypropan, 1,4-Dihydroxybutan, 1,6-Dihydroxyhexan oder Neopentylglycol.

Die als Einkomponentensysteme verwendeten Polyurethanklebstoffe sind gewöhnlich Präpolymere der Polyisocyanate und Polyole mit freien Isocyanatgruppen, die durch Umsetzung mit Wasser die Aushärtung bewirken. Beispiele hierfür finden sich in der deutschen Patentschrift Nr. 2 549 227. Zweikomponentensysteme bestehen entweder aus Präpolymeren mit freien Isocyanatgruppen, die mit Hilfe hydroxylgruppenhaltiger Vernetzer ausgehärtet werden, oder aus Präpolymeren mit freien Hydroxylgruppen, die mit Hilfe isocyanatgruppenhaltiger Vernetzer ausgehäret werden. Beispiele für erstere finden sich in der deutschen Offenlegungsschrift Nr. 4 021 113 und der europäischen Patentschrift Nr. 0 150 444. Beispiele für letztere sind in der europäischen Patentschrift Nr. 0 176 726 beschrieben.

Ungeachtet dessen, welcher Gruppe die Polyurethanklebstoffe zuzurechnen sind, können diese lösungsmittelhaltig oder lösungsmittelfrei sein, wobei im ersteren Fall organisches Lösungsmittel vor dem Verklebungsvorgang ausgetrieben wird.

Katalysatoren, die die Aushärtungsreaktionen des Polyurethanklebstoffes beschleunigen und daher erfindungsgemäß verwendet werden können, sind als solche bekannt. Soweit sie wasserlöslich oder im wesentlichen wasserlöslich sind, sind sie im vorliegenden Verfahren verwendbar, wobei es für den Fachmann auf der Hand liegt, daß er für bestimmte Polyurethansysteme durch Auswahlt der Katalysatoren eine Optimierung der angestrebten Verbesserungen erzielen kann.

Als Katalysatoren für den Polyurethanklebstoff können sowohl Lewis-Basen als auch Lewis-Säuren eingesetzt werden. Die wichtigsten Lewis-Basen sind tertiäre Amine unterschiedlichster Struktur, wie Diazabicyclooctan, Triethylamin, Dimethylbenzylamin, Bisdimethylaminoethylether, Tetramethylguanidin oder Bisdimethylaminomethylphenol. Die wichtigsten katalytisch wirkenden Lewis-Säuren sind metallorganische Verbindungen, insbesondere zinnorganische Verbindungen, wie Zinndiethylhexoat, Dibutylzinndilaurat, Dibutylzinnbisdodecylmercaptid oder Bleiphenylethyldithiocarbaminat. Metallorganische Verbindungen aktivieren die Isocyanatgruppen im Sinne einer Erhöhung der Elektrophilie, während Basen vor allem die Nucleophilie der OH-Gruppen erhöhen.

Andere bekannte Katalysatoren sind Alkalisalze organischer Säuren und Phenole sowie Phenol-Mannich-Basen, Phosphine und Phospholinoxide.

Selbstverständlich können auch Kombinationen mehrerer Katalysatoren verwendet werden, wie Kombinationen von tertiären Aminen und zinnorganischen Verbindungen, und solche Kombinationen können sogar synergistische Wirkungen haben. Weiterhin ist selbstverständlich, daß die Katalysatoren auch nach Gesichtspunkten, wie der beabsichtigten Verwendung der Verbundfolie, ausgewählt werden. Beispielsweise wird man bei Verwendung der Verbundfolie auf dem Lebensmittelsektor, der hier von besonderer Bedeutung ist, als Katalysatoren keine Bleiverbindungen verwenden können. Technisch wichtige Katalysatoren für Polyurethane, die auch im vorliegenden Verfahren eingesetzt werden können, finden sich in "Kunststoffhandbuch", 2. Auflage, Band 7 (Polyurethane) des Carl Hanser Verlages München, Seiten 92 bis 98, auf deren Inhalt Bezug genommen wird.

Im vorliegenden Verfahren erwies sich neben den bekannten tertiären Aminen und/oder zinnorganischen Verbindungung ε-Caprolactam als besonders geeignet. Zweckmäßig ist der Katalysator in der erfindungsgemäß verwendeten wäßrigen Lösung in einer Konzentration von 0,001 bis 10 Gew.-%, bevorzugt in einer Konzentration von 0,01 bis 5 Gew.-% und besonders in einer Konzentration von 0,1 bis 2 Gew.-% enthalten. Innerhalb dieser Bereiche kann je nach der katalytischen Wirksamkeit der Einzelverbindung für ein bestimmtes System variiert werden.

Besonders bevorzugt ist es, der erfindungsgemäß benutzten wäßrigen Lösung wenigstens ein Benetzungsmittel zuzusetzen, da überraschenderweise durch kombinierte Verwendung von Katalysator und Benetzungsmittel in der Befeuchtungslösung eine synergistische Wirkung eintritt.

Grundsätzlich können hierbei beliebige Benetzungsmittel oder Tenside eingesetzt werden, die anionische, kationische, nichtionogene oder amphotere Benetzungsmittel sein können. Beispiele anionischer Tenside sind Alkylbenzolsulfonate, Alkansulfonate, Fettalkoholsulfate, Fettalkoholethersulfate, α-Olefinsulfonate, α-Estersulfonate, Alkylphosphate und Alkyletherphosphate. Beispiele kationischer Benetzungsmittel sind Alkylammoniumverbindungen und Imidazoliniumverbindungen. Beispiele nichtionogener Benetzungsmittel sind Fettalkoholethoxylate, Alkylphenolethoxylate, Fettaminethoxylate, Fettsäureethoxylate, Fettsäureesterethoxylate, sonstige Alkoxylate, Alkanolamide, Zuckertenside und Aminoxide. Als zweckmäßig erwiesen sich im vorliegenden Verfahren die Alkansulfonate, wie beispielsweise Sulfobernsteinsäureester.

Die erfindungsgemäß eingesetzten wäßrigen Lösungen enthalten die einzelnen Benetzungsmittel oder Tenside bzw. Benetzungsmittelgemische zweckmäßig in einer Konzentration von 0,001 bis 5 Gew.-%, vorzugsweise in einer Konzentration von 0,01 bis 1 Gew.-%, besonders in einer Konzentration von 0,01 bis 0,1 Gew.-%.

In dem erfindungsgemäßen Verfahren wird nach üblicher Technik auf einer Folie die unausgehärtete Polyurethanklebstoffschicht aufgebracht, und die beschichtete Folie wird mit einer zweiten klebstofffreien Folie zusammengeführt und durch Preßwalzen kaschiert. Dabei kann erfindungsgemäß die wäßrige Katalysatorlösung entweder irgendwo vor dem Kaschierwalzenpaar auf die Klebstoffschicht auf der einen Folie oder aber auf die klebstofffreie andere Folie aufgebracht werden, wie beispielsweise durch Besprühen, Wischen oder Tauchen. Das Befeuchten kann aber auch in der Weise erfolgen, daß am Einzug des Kaschierwalzenpaares in dem Bereich vor der Vereinigung der beiden Folien ein Sumpf der wäßrigen Katalysatorlösung vorgesehen wird, der den Klebstoff unmittelbar vor der Vereinigung mit der klebstofffreien Folie befeuchtet. In jedem Fall wird im vorliegenden Verfahren die wäßrige Katalysatorlösung zweckmäßig im Überschuß zugeführt, so daß die Klebstoffschicht beim Befeuchten überflutet wird. Dies kann beispielsweise durch überschüssiges Besprühen und Ablaufenlassen der überschüssigen Lösung oder aber mit Hilfe des erwähnten Sumpfes am Kaschiervalzenspalt erfolgen.

Wie auch immer das erfindungsgemäße Verfahren durchgeführt wird, erzielt man die überragenden Vorteile einer schnellen Anfangshärtung und vergleichsweise raschen Aushärtung sowie einer geringen und während der Aushärtung schnell abnehmenden Isocyanatmigration und eines überraschend verbessserten Verlaufes des Klebstoffes im Walzenspalt des Kaschierwalzenpaares.

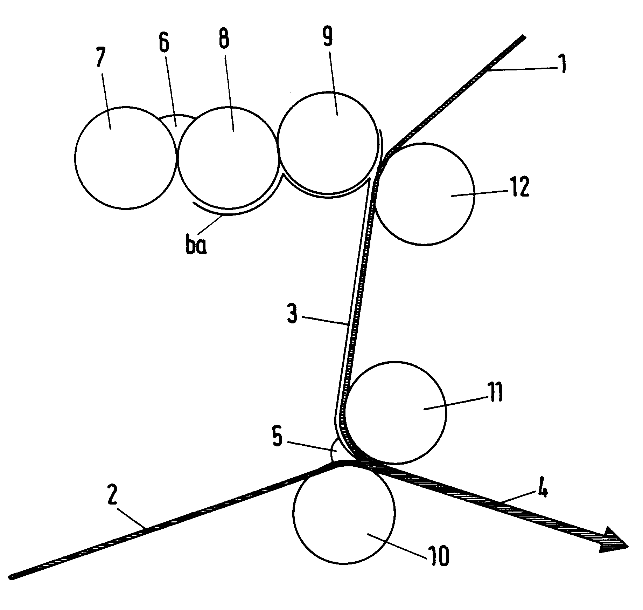

In der Zeichnung ist der Verfahrensablauf anhand eines Beispiels schematisch dargestellt.

Gemäß der Zeichnung wird eine Folie 1 über eine Walze 12 dem Kaschierwalzenpaar 10/11 zugeführt und dabei mit Hilfe des Auftragswalzensystems 7, 8, 9 mit Klebstoff beschichtet. Mit dem Bezugszeichen 6 ist ein Klebstoffsumpf über dem Walzenspalt der Walzen 7 und 8 bezeichnet. Die Klebstoffschicht auf der Folie 1 besitzt das Bezugszeichen 3.

Gleichzeitig mit der Folie 1 wird eine Folie 2 ohne Klebstoff dem Kaschierwalzenpaar 10, 11 zugeführt. Vor dem Eintritt in den Walzenspalt des Kaschierwalzenpaares 10, 11 befindet sich ein Sumpf 5 einer wäßrigen Katalysator und Benetzungsmittel enthaltenden Lösung, mit Hilfe derer die Klebstoffschicht 3 auf der Folie 1 befeuchtet wird, bevor die beiden Folien im Walzenspalt des Kaschierwalzenpaares 10, 11 zusammengeführt werden. Die fertige erfindungsgemäß hergestellte Verbundfolie verläßt das Kaschierwalzenpaar 10, 11 und besitzt das Bezugszeichen 4. Der Klebstoffilm auf dem Auftragswalzensystem 7, 8, 9 wurde mit 6a bezeichnet.

### Beispiele

### Beispiel 1

In diesem Beispiel wurde ein Standardnylonfilm mittels eines Polyurethan-Einkomponentenklebstoffes mit einem Standardpolyethylenfilm kaschiert. Der Klebstoff mit der Handelsbezeichnung Polybond ET 100 X 142 (Morton International GmbH, Bremen) bestand aus einem handelsüblichen isocyanatendständigen Präpolymerprodukt aus 4,4'-Diphenylmethandiisocyanat und Polypropylenglycolether. Der Klebstoff wurde in einer Menge von etwa 1,5 g/m² auf den Nylonfilm aufgebracht, das Kaschieren erfolgte unter konstanten Bedingungen bei 23°C und 55 % relativer Feuchtigkeit. Die Befeuchtungslösung wurde auf den Polyethylenfilm durch Aufsprühen aufgebracht.

Zu Vergleichszwecken wurde in einem Versuch ohne Befeuchtung gearbeitet, in einem zweiten Versuche wurde mit reinem Wasser besprüht, und in einem dritten Versuch wurde mit einer wäßrigen Lösung von 1 % ε-Caprolactam und in einem vierten Versuch mit einer wäßrigen Lösung von 1 % ε-Caprolactam und 0,05 % Natriumdihexylsulfosuccinat besprüht. Das ε-Caprolactam ist ein Katalysator für die Polyurethanhärtung, das Natriumdihexylsulfosuccinat ist ein Benetzungsmittel.

In bestimmten zeitlichen Abständen wurden für die vier erhaltenen Verbundfolien die Bindungsfestigkeiten in Anlehnung an DIN 53 357 in N/15 mm und die Isocyanatmigration gemäß BGesundh. Bl. 13, Seite 262 (1970) und 14, Seite 13 (1971) in µm/50 mm (Extraktion mit Wasser, Aminbestimmung) ermittelt. Die Ergebenisse finden sich in den nachfolgenden Tabellen I und II.

**Tabelle I**

| **Bindungsfestigkeiten (N/15 mm)** | | | | |
|---|---|---|---|---|
| | **sofort** | **1 h** | **nach 2 h** | **4 h** |
| ET 100 x 142 | 0,08 | 0,11 | 0,12 | 0,14 |
| ET 100 x 142 + H₂O | 0,09 | 0,60 | 1,20 | 2,50 |
| ET 100 x 142 + H₂O + 1 % ε-Caprolactam | 0,09 | 1,57 | 2,10 | 5,0 |
| ET 100 x 142 + H₂O + 1 % ε-Caprolactam + 0,05 % Natriumdihexylsulfosuccinat | 0,08 | 1,40 | 2,20 | 6,0 |

**Tabelle II**

| **Isocyanatmigration (µm/50 ml)** | | | |
|---|---|---|---|
| | **nach 2. Tag** | **nach 3. Tag** | **nach 6. Tag** |
| ET 100 x 142 | 73 | 51 | 34 |
| ET 100 x 142 + H₂O | 7,9 | 5,3 | 0,5 |
| ET 100 x 142 + H₂O + 1 % ε-Caprolactam | 4,5 | 1,4 | n. n.* |
| ET 100 x 142 + H₂O + 1 % ε-Caprolactam + 0,05 % Natriumdihexylsulfosuccinat | 2,0 | 0,9 | n. n.* |

| | | | |
|---|---|---|---|
| * n. n. = nicht feststellbar | | | |

Die Ergebnisse der Tabelle I zeigen, daß die Anfangshaftung nach einer Stunde bei den erfindungsgemäß hergestellten Verbundfolien erheblich besser als bei den beiden anderen Verbundfolien war. Weiterhin zeigt die Tabelle, daß bei den erfindungsgemäßen Verbundfolien praktisch eine Endhärtung (5,0 N/15 mm) bereits nach 4 h erzielt war, während die außerhalb des Erfindungsgedankens liegenden Verbundfolien zu diesem Zeitpunkt noch keineswegs ausgehärtet waren. Nach 4 h war bei den erfindungsgemäß hergestellten Verbundfolien die Festigkeit so groß, daß eher Risse in der Folie als eine Trennung an der Klebstoffschicht eintraten.
Die Werte der Tabelle II zeigen, daß die Isocyanatmigration durch das erfindungsgemäße Verfahren gegenüber der Verwendung von Wasser allein erheblich abnahm und daß im Gegensatz zu den Verbundfolien außerhalb des Erfindungsgedankens nach der Erfindung bereits nach 6 Tagen keine Isocyanatmigration mehr festgestellt werden konnte. Durch Zusatz des Benetzungsmittels konnte überraschenderweise die Isocyanatmigration weiter stark reduziert werden, während durch das Benetzungsmittel der Härtungsverlauf nicht wesentlicht beeinflußt wurde.

### Beispiel 2

Nach dem gleichen Verfahren wie im Beispiel 1 wurden Verbundfolien mit einem Polyurethan-Zweikomponentenklebstoff hergestellt. Dieser bestand aus einem isocyanatendständigen Präpolymerprodukt aus 4,4'-Diphenylmethandiisocyanat und einem Polypropylenglycolether (Handelsbezeichnung PENTACOL SK 400 A der Morton International GmbH, Bremen) und einem Polypropylenglycolether (Handelsbezeichnung C 78 der Morton International GmbH, Bremen) als hydroxylendständiger Vernetzer.

Wiederum wurden vier Verbundfolien hergestellt, in einem ersten Versuch ohne Befeuchtungslösung, in einem zweiten Versuch unter Befeuchtung mit Wasser allein, in einem dritten Versuch unter Verwendung einer wäßrigen Katalysatorlösung und in einem vierten Versuch unter Verwendung einer wäßrigen Lösung von Katalysator und Benetzungsmittel. Katalysator und Benetzungsmittel sowie deren Konzentration waren die gleichen wie im Beispiel 1.

In den Tabellen III und IV finden sich die entsprechend Beispiel 1 bestimmten Werte der Bindungsfestigkeiten und Isocyanatmigration, wobei bezüglich der letzteren nur mit der Probe ohne Befeuchtungslösung verglichen wurde. Die Ergebnisse entsprechen in der Tendenz denjenigen des Beispiels 1.

**Tabelle III**

| **Bindungsfestigkeiten (N/15 mm)** | | | |
|---|---|---|---|
| | **nach 2 h** | **nach 6 h** | **nach 24 h** |
| SK 400 A + C 78 (100 : 35) | 0,03 | 0,08 | 3,0 |
| SK 400 A + C 78 (100 : 35) + H₂O | 0,05 | 1,0 | 4,4 |
| SK 400 A + C 78 (100 : 35) + H₂O + 1 % ε-Caprolactam | 0,06 | 1,2 | 6,0 |
| SK 400 A + C 78 (100 : 35) + H₂O + 1 % ε-Caprolactam + 0,05 % Natriumdihexylsulfosucinat | 0,10 | 2,3 | 7,0 |

**Tabelle IV**

| **Isocyanatmigration (µm/50 ml)** | | | | | |
|---|---|---|---|---|---|
| | **nach 1. Tag** | **2. Tag** | **3. Tag** | **5. Tag** | **6. Tag** |
| SK 400 A + C 78 (100 : 35) | 2,8 | - | 7,2 | - | n. n. |
| SK 400 A + C 78 (100 : 35) + H₂O + 1 % ε-Caprolactam + 0,05 % Natriumdihexylsulfossucinat | 1,1 | n. n. | | | |

## Patentansprüche

1. Verfahren zur Herstellung von Verbundfolien durch Verkleben von wenigstens zwei Folien mittels eines Polyurethanklebstoffes unter Befeuchtung der Klebstoffschicht oder der klebstofffreien Folie, **dadurch gekennzeichnet**, daß man die Befeuchtung mit einer wäßrigen Lösung wenigstens eines die Aushärtungsreaktionen des Polyurethanklebstoffes beschleunigenden Katalysators vornimmt.

2. Verfahren nach Anspruch 1, **dadurch gekennzeichnet**, daß man für die Befeuchtung eine wäßrige Lösung verwendet, die zusätzlich zu dem Katalysator wenigstens ein Benetzungsmittel enthält.

3. Verfahren nach Anspruch 1 oder 2, **dadurch gekennzeichnet**, daß man als Katalysator ein tertiäres Amin und/oder eine metallorganische Verbindung, vorzugsweise zinnorganische Verbindung vewendet.

4. Verfahren nach Anspruch 1 oder 2, **dadurch gekennzeichnet**, daß man als Katalysator ε-Caprolactam verwendet.

5. Verfahren nach einem der Ansprüche 1 bis 4, **dadurch gekennzeichnet**, daß man eine wäßrige Lösung verwendet, die den Katalysator in einer Konzentration von 0,001 bis 10 Gew.-%, vorzugsweise 0,01 bis 5 Gew.-%, besonders 0,1 bis 2 Gew.-% enthält.

6. Verfahren nach einem der Ansprüche 1 bis 5, **dadurch gekennzeichnet**, daß man eine wäßrige Lösung verwendet, die als Benetzungsmittel wenigstens ein Alkansulfonat, vorzugsweise einen Sulfobernsteinsäureester enthält.

7. Verfahren nach einem der Ansprüche 2 bis 6, **dadurch gekennzeichnet**, daß man eine wäßrige Lösung verwendet, die das Benetzungsmittel in einer Konzentration von 0,001 bis 5 Gew.-%, vorzugsweise 0,01 bis 1 Gew.-%, besonders 0,01 bis 0,1 Gew.-% enthält.

8. Verfahren nach einem der Ansprüche 1 bis 7, **dadurch gekennzeichnet**, daß man mit der wäßrigen Lösung durch Besprühen, Wischen, Tauchen oder Erzeugen eines Sumpfes der wäßrigen Lösung vor der Stelle der Zusammenführung der Folien befeuchtet.

## Claims

1. Process for the production of laminated films by adhesive bonding of at least two films by means of a polyurethane adhesive with moistening of the adhesive layer or of the adhesive-free film, characterized in that moistening is carried out using an aqueous solution of at least one catalyst which accelerates the curing reactions of the polyurethane adhesive.

2. Process according to Claim 1, characterized in that an aqueous solution which contains at least one wetting agent in addition to the catalyst is used for moistening.

3. Process according to Claim 1 or 2, characterized in that a tertiary amine and/or an organometallic compound, preferably an organotin compound, are used as the catalyst.

4. Process according to Claim 1 or 2, characterized in that ε-caprolactam is used as the catalyst.

5. Process according to any of Claims 1 to 4, characterized in that an aqueous solution which contains the catalyst in a concentration of 0.001 to 10% by weight, preferably 0.01 to 5% by weight, in particular 0.1 to 2% by weight, is used.

6. Process according to any of Claims 1 to 5, characterized in that an aqueous solution which contains at least one alkanesulphonate, preferably a sulphosuccinate, as a wetting agent is used.

7. Process according to any of Claims 2 to 6, characterized in that an aqueous solution which contains the wetting agent in a concentration of 0.001 to 5% by weight, preferably 0.01 to 1% by weight, in particular 0.01 to 0.1% by weight, is used.

8. Process according to any of Claims 1 to 7, characterized in that moistening with the aqueous solution is effected by spraying, wiping, immersion or providing a tank of aqueous solution before the point of combination of the films.

## Revendications

1. Procédé pour la préparation de feuilles composites consistant à coller au moins deux feuilles à l'aide d'une colle de polyuréthane en humidifiant la couche de colle ou la feuille exempte de colle, caractérisé en ce qu'on réalise l'humidification avec une solution aqueuse d'au moins un catalyseur accélérant la réaction de durcissement de la colle de polyuréthane.

2. Procédé selon la revendication 1, caractérisé en ce qu'on utilise pour l'humidification une solution aqueuse qui contient en plus du catalyseur au moins un agent mouillant.

3. Procédé selon la revendication 1 ou 2, caractérisé en ce qu'on utilise comme catalyseur une amine tertiaire et/ou un composé organométallique, de préférence un composé organique de l'étain.

4. Procédé selon la revendication 1 ou 2, caractérisé en ce qu'on utilise comme catalyseur l'ε-caprolactame.

5. Procédé selon l'une quelconque des revendications 1 à 4, caractérisé en ce qu'on utilise une solution aqueuse qui contient le catalyseur avec une concentration de 0,001 à 10 % en poids, de préférence de 0,01 à 5 % en poids, encore mieux de 0,1 à 2 % en poids.

6. Procédé selon l'une quelconque des revendications 1 à 5, caractérisé en ce qu'on utilise une solution aqueuse qui contient comme agent mouillant au moins un alcanesulfonate, de préférence un sulfosuccinate.

7. Procédé selon l'une des revendications 2 à 6, caractérisé en ce qu'on utilise une solution aqueuse qui contient l'agent mouillant avec une concentration de 0,001 à 5 % en poids, de préférence de 0,01 à 1 % en poids, encore mieux de 0,01 à 0,1 % en poids.

8. Procédé selon l'une quelconque des revendications 1 à 7, caractérisé en ce qu'on humidifie avec la solution aqueuse en aspergeant, essuyant, immergeant ou en produisant un réservoir de la solution aqueuse avant la position de la réunion des feuilles.
